(19) Europäisches Patentamt
European Patent Office
Office européen des brevets

(11) **EP 0 688 440 B1**

(12) **EUROPÄISCHE PATENTSCHRIFT**

(45) Veröffentlichungstag und Bekanntmachung des Hinweises auf die Patenterteilung:
**14.08.2002 Patentblatt 2002/33**

(51) Int Cl.⁷: **G02B 21/00**, G02B 21/36
// G02B15/22

(21) Anmeldenummer: **95905097.2**

(22) Anmeldetag: **21.12.1994**

(86) Internationale Anmeldenummer:
**PCT/EP94/04253**

(87) Internationale Veröffentlichungsnummer:
**WO 95/18397 (06.07.1995 Gazette 1995/29)**

(54) **OPTISCHES SYSTEM MIT VARIABLEM ABBILDUNGSMASSSTAB**

OPTICAL SYSTEM WITH VARIABLE MAGNIFICATION

SYSTEME OPTIQUE A AGRANDISSEMENT VARIABLE

(84) Benannte Vertragsstaaten:
**AT CH DE GB LI**

(30) Priorität: **24.12.1993 DE 4344366**

(43) Veröffentlichungstag der Anmeldung:
**27.12.1995 Patentblatt 1995/52**

(73) Patentinhaber: **CARL ZEISS JENA GmbH
07745 Jena (DE)**

(72) Erfinder: **BAUMANN, Hans-Georg
D-07749 Jena (DE)**

(74) Vertreter: **Fehners, Klaus Friedrich,
Dipl.-Ing., Dipl.-Wirtsch.-Ing.
Patentanwälte
Geyer, Fehners & Partner
Perhamerstrasse 31
80687 München (DE)**

(56) Entgegenhaltungen:
EP-A- 0 033 375          EP-A- 0 453 239
US-A- 3 545 321          US-A- 4 525 042

• **PATENT ABSTRACTS OF JAPAN, unexamined applications, P field, vol. 16, no. 345, issued 1992, Juli 27, THE PATENT OFFICE JAPANESE GOVERNMENT, page 10 P 1392; & JP,A,04 104 116 (TOUYOU KOUGAKU KOUGIYOU K.K.)**
• **WARREN J. SMITH: "Modern Optical Engineering", , MAC GRAW AND HILL,**

**Beschreibung**

Die Erfindung betrifft ein optisches System nach dem Oberbegriff des Anspruches 1.

Videoausgänge an Mikroskopen werden für verschiedene Arbeitsweisen benötigt, z.B. zur Beobachtung über einen Monitor, zur Herstellung von Videoprints, zur rechnergestützten Bildverarbeitung oder zur Archivierung.

Wird das Zwischenbild ohne Anpassungsoptik auf der CCD-Matrix erzeugt, so wird in den wenigsten Fällen ein optimaler Abbildungsmaßstab bzw. Bildausschnitt vorliegen. Diesem Mangel könnten spezielle Videoanpassungen in Form von Homalen oder Projektiven abhelfen, günstiger sind jedoch Zoomsysteme.

Der nötige Zoombereich ergibt sich aus dem Quotienten aus dem Durchmesser der CCD-Matrix zum Mikroskopzwischenbild mit ca. 8,8 mm/22mm=0.4 als kleinsten Wert bis zum Quotienten aus Auflösung der CCD-Matrix und Zwischenbild mit 10 m/5 m=2 als größten Wert.

Hierbei ist berücksichtigt, daß bei automatischer Bildauswertung eine etwa doppelt so hohe Auflösung erreicht wird als visuell. Dabei muß eine den hochauflösenden Farbkameras entsprechende Bildkorrektion erfüllt werden, mit den vorgegebenen technischen Anschlußmaßen.

Es sind Zoomsysteme (DE 3544148, DE 3418639 ) mit endlicher Übertragungslänge, z.B. für den Faksimiledruck oder Kopiergeräte bekannt, die theoretisch in Kombination für solche Zwecke einsetzbar sind.

Sowohl bezüglich der Baulänge als auch der Zahl der verwendeten optischen Glieder nach sowie bezüglich des erforderlichen Bereiches des Abbildungsmaßstabes sind die dabei auftretenden Nachteile jedoch kaum akzeptabel.

In US 3454321 ist ein pankratisches System beschrieben, das aus zwei beweglichen Linsen positiver Brechkraft besteht.

Die angegebene Baulänge ist relativ hoch. Außerdem liegt das entstehende Zwischenbild zwischen den Linsen, d.h. zur Erzeugung eines reellen Bildes auf der CCD-Matrix wäre noch ein zusätzliches Linsensystem erforderlich.

Die angegebenen Vergrößerungsmaßstäbe sind zur Lösung des hier anstehenden Problems nicht geeignet.

Die Erfindung geht von der Aufgabe aus, eine Videozoomanpassung kurzer Baulänge zu realisieren, die alle praktisch benötigten Abbildungsmaßstäbe für zur Zeit verfügbare und zu erwartende Videokameratypen ermöglicht und trotz dieser Anforderung mit wenigen optischen Bauteilen auskommt und somit für den Anwender eine kostengünstige und effiziente Lösung darstellt.

Die Aufgabe wird erfindungsgemäß bei einer gattungsgemäßen Anordnung durch die kennzeichnenden Merkmale des ersten Anspruchs gelöst.

Besonders vorteilhafte Weiterbildungen der Erfindung sind in den Unteransprüchen aufgeführt und werden,in der nachstehenden Beschreibung näher erläutert.

Das erfindungsgemäße optische System besteht aus 3 Gliedern positiver Brechkraft, wovon das in Lichtrichtung erste Glied eine feststehende achromatische Linsengruppe ist, während das zweite und dritte Glied je eine achromatische, längs der optischen Achse verschiebbare Gruppe ist.

Die Feldlinsengruppe ist dabei vorteilhaft als Meniskus ausgebildet, der vor dem vom Mikroskop erzeugten Bild B angeordnet ist und dessen letzte Fläche zur Korrektion der Bildfeldwölbung eine zerstreuende ist und nah am entstehenden Zwischenbild ZB liegt, dessen erste Fläche dagegen zur Erzeugung der richtigen Lage der Austrittspupille nahe der Geräteanlagefläche A liegt.

Die Austrittspupille liegt besonders vorteilhaft in der dritten Linsengruppe bei deren mittlerer Verschiebelage. Damit ergibt sich eine leicht konvergente Pupillenabbildung, womit insgesamt der für hochauflösende Farbkameras nötige geringe Bildwinkel im gesamten Zoombereich eingehalten wird.

Durch diese Pupillenabbildung wird außerdem erreicht, daß die Durchmesser der zweiten und dritten Linsengruppe minimal werden, was nicht nur optimal für die Bildfeldkorrektion ist, sondern sich auch günstig auf den Preis auswirkt.

Eine weitere erfindungsgemäße Eigenschaft des ersten optischen Gliedes ist es, das Zwischenbild im Abbildungsmaßstab von etwa 1:2 abzubilden, was sowohl zur Verkürzung der Baulänge führt, als auch in Verbindung mit dem meniskusförmigen Aufbau die Bildfeldkrümmung des sammelnden zweiten und dritten Gliedes kompensiert, weswegen die zerstreuende letzte Fläche der Feldlinsengruppe zweckmäßig in dem kürzestmöglichen Abstand vor dem entstehenden Zwischenbild liegt, ohne selbst scharf abgebildet zu werden.

Das zweite und dritte optische Glied sind im einfachsten Fall zwei gleich aufgebaute achromatische Kittlinsen mit einer Brennweite von etwa 1/3 der Baulänge BI (Abstand vom Mikroskpzwischenbild zur CCD-Matrix) und einem Abstand untereinander von ebenfalls etwa 1/3 der Baulänge bei der mittleren Zoomstellung.

Das von dem ersten Glied entworfene Zwischenbild liegt im vorderen Brennpunkt des zweiten Gliedes, die CCD-Matrix im hinteren Brennpunkt des dritten Gliedes.

Damit erzeugen das zweite und dritte Glied einen Abbildungsmaßstab von 1:1, in Verbindung mit dem ersten Glied also etwa 0.5:1. Verschiebt man das zweite und dritte Glied nach vorn, so entsteht ein höherer Abbildungsmaßstab, im anderen Fall ein kleinerer.

Bei diesem gemeinsamen Verschieben der zweiten und dritten Linsengruppe muß zur Erhaltung der Fokussierung auf der CCD-Matrix die dritte Linsengruppe anders bewegt werden als die zweite, wenn die Baulänge konstant bleiben soll. Es ist aber auch möglich, die zweite und dritte Linsengruppe gemeinsam als eine Baueinheit zu verschieben und den Focusausgleich durch Verschieben der Kameraanlage zu erzielen. Das hat den Vorteil, daß die gegenseitige Zentrierung keinen Einfluß auf die Bildfehler hat, sondern nur einen Mittenversatz ergibt.

Für einen Zoombereich über 4x ist es zweckmäßig, von dem oben beschriebenen spiegelsymmetrischen Aufbau des zweiten und dritten Gliedes zugunsten einer besseren Bildkorrektion für den kleineren Abbildungsmaßstab abzuweichen.

Um innerhalb des gesamten Zoombereiches eine den Anforderungen der besten Farbkameras genügende Bildgüte zu erreichen, müssen alle drei Glieder für sich achromatisch korrigiert sein, auch bezüglich der Farbvergrößerung.

Dabei genügt es als einfachste Lösung für den erfindungsgemäßen Aufbau, wenn jedes der drei Glieder eine einfache Kittlinse ist und das zweite und dritte Glied aus den gleichen Schwerkron- und Schwerflintgäsern bestehen.

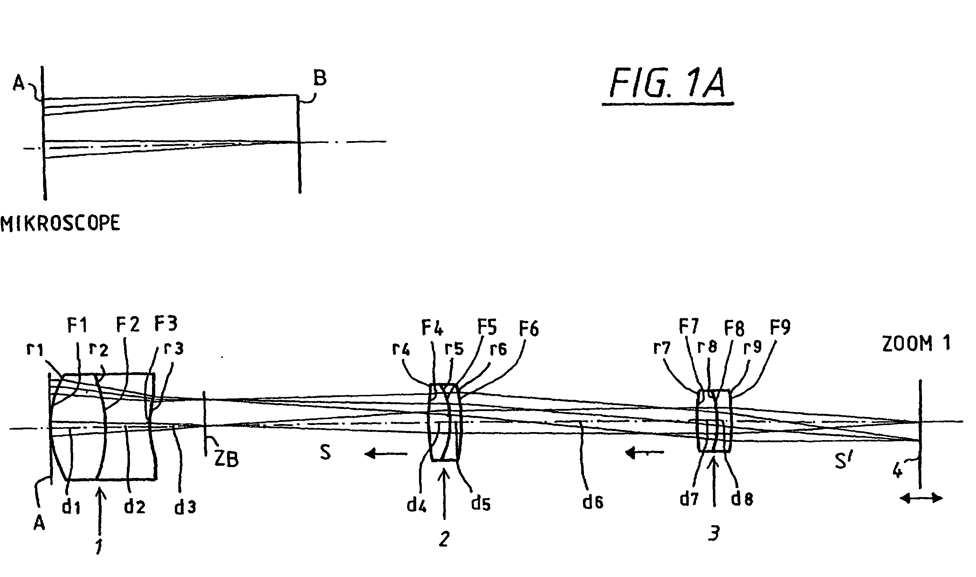

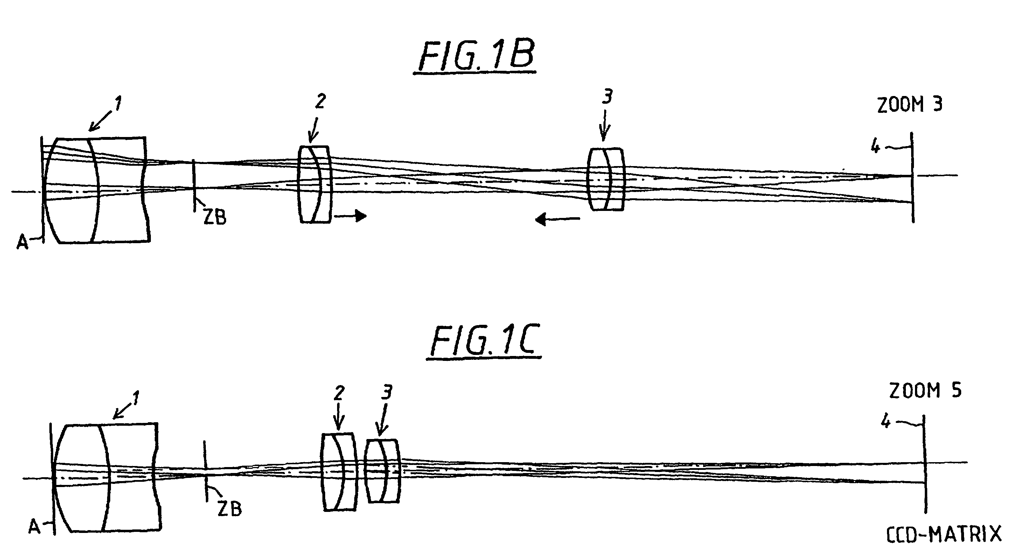

Anhand der schematischen Darstellung in Fig.1 wird bei verschiedenen Zoomstellungen die Erfindung näher erläutert:

Dabei ist A die Anlagefläche des Video-bzw. Fotoausganges des Mikroskopes und B das ohne Zoom vom Mikroskop erzeugte Bild, das über ein erstes optisches Glied 1 mit zwei Linsen der Dicke d1 und d2 sowie den Linsenflächen F1,F2,F3 in eine Zwischenbildebene ZB abgebildet wird, die zu F3 den Abstand d3 aufweist.

Im weiteren Strahlengang sind vor einer CCD-Matrix 4 ein zweites und ein drittes optisches Element 2,3 mit Linsen der Dicke d4,d5 und den Linsenflächen F4,F5,F6 bzw. F7,F8,F9 und d7,d8, jeweils verschiebbar, angeordnet.

Der Abstand der Zwischenbildebene ZB zu F4 ist S, der Abstand von F6 zu F7 ist d6 und der Abstand der Fläche f9 zur CCD-Matrix 4 ist S'.

r1-r9 sind die Krümmungsradien der Einzellinsen.

In der Abbildung sind den Zoomfaktoren 1,3 und 5 entsprechende Stellungen der optischen Glieder 1,2 und 3 dargestellt. Die optischen Parameter des zweiten und dritten Gliedes betragen hierbei:

| Opt.Glied | Fläche F | Radius r | Dicke d | Brechzahl | Abbezahl |
|---|---|---|---|---|---|
| 2 | F4 | r4=207,09 | | | |
| | | | d4=5,10 | 1,60994 | 56,38 |
| | F5 | r5=-16.555 | | | |
| | | | d5=2,90 | 1,67764 | 31,97 |
| | F6 | r6=-41,726 | | | |
| 3 | F7 | r7=41,129 | | | |
| | | | d7=4,97 | 1,60994 | 56,38 |
| | F8 | r8=-16.555 | | | |
| | | | d8=3.03 | 1,67764 | 31,97 |
| | F9 | r9=-53.884 | | | |

Die optischen Parameter des ersten Gliedes betragen:

| Fläche F | Radius r | Dicke d | Brechzahl | Abbezahl |
|---|---|---|---|---|
| F1 | r1= 22,786 | | | |
| | | d1=13,04 | 1,61170 | 46,14 |
| F2 | r2=-28,978 | | | |
| | | d2= 10,96 | 1.70445 | 29.84 |
| F3 | r3=24,412 | | | |

bei einem Abstand AB von 60mm und einer Zwischenbildentfernung d3 von 12,54.

Der Bewegungsablauf des zweiten und dritten Gliedes läßt sich durch folgende Tabelle darstellen:

| Zoomfaktor | Abstand S | Luftabstand d6 | Bildentfernung S' |
|---|---|---|---|
| | (Zwischenbild bis F4) | | |
| 1 | 54.326 | 54.717 | 44.957 |
| 1,5 | 24,792 | 60,949 | 68,219 |
| 2 | 18,698 | 52,126 | 83,136 |
| 2.5 | 19,428 | 41,766 | 92,766 |
| 3 | 21,257 | 21,256 | 100.447 |
| 3,5 | 23,149 | 23,676 | 107,135 |
| 4 | 24,894 | 15,875 | 113,191 |
| 4.5 | 26,459 | 8.708 | 118.793 |
| 5 | 27,856 | 2,060 | 124,044 |

Über das dargestellte Ausführungsbeispiel hinaus sind auch andere vorteilhafte Varianten der Erfindung denkbar. So können, wie schon ausgeführt, das zweite und dritte Glied identisch sein und um den gleichen Betrag in gleicher Richtung verschoben werden, wobei eine Nachführung der CCD-Matrix entlang der optischen Achse erfolgt. Es sind auch weitere Ausführungsformen des ersten Gliedes denkbar, indem die Brennweite f1 des ersten Gliedes zur Baulänge Bl ein Verhältnis von 1+/-0,2 hat und der Abbildungsmaßstab 0.4-2 beträgt und der Abstand AB der Anlagefläche A des Video- bzw. Fotoausganges des Mikroskopes zum vom Mikroskop erzeugten Bild B größer oder gleich 60mm ist, bei folgenden optischen Parametern des ersten Gliedes innerhalb einer Toleranz von +/-20%:

| Fläche F | Radius r | Dicke d | Brechzahl | Abbezahl |
|---|---|---|---|---|
| F1 | r1= 22,786 | | | |
| | | d1=13,04 | 1,61170 | 46,14 |
| F2 | r2=-28,978 | | | |
| | | d2= 10,96 | 1.70445 | 29.84 |
| F3 | r3=24,412 | | | |

bei einem Abstand AB größer gleich 60mm und einer Zwischenbildentfernung d3 von 12,54.

Der Abstand der ersten Fläche F1 von der Geräteanlagefläche A erhöht sich mittels eines Zwischenringes dabei um den Betrag, den der Betrag von AB oberhalb 60 mm liegt.

Eine weitere Ausbildung des ersten Gliedes besteht darin, daß die Brennweite f1 ein Verhältnis von 0,68 +/-20% zur Baulänge Bl hat, bei einem Abbildungsmaßstab von 0.5-2,5 und einem Abstand AB größer oder gleich 44mm, mit folgenden Parametern des ersten Gliedes innerhalb einer Toleranz von 20%:

| Fläche F | Radius r | Dicke d | Brechzahl | Abbezahl |
|---|---|---|---|---|
| F1 | r1=35,738 | | | |
| | | d1=13.00 | 1,60994 | 56,38 |
| F2 | r2=-29,427 | | | |
| | | d2=12.00 | 1,66885 | 35,56 |
| F3 | r3=74,989 | | | |

bei einem Abstand AB von größer gleich 44 mm und einer Zwischenbildentfernung d3 von 11.54.

**Patentansprüche**

**1.**  Optisches System mit variablem Abbildungsmaßstab zur Abbildung eines von einem Mikroskop erzeugten Bildes (B) in die Ebene der CCD-Matrix einer Videokamera, mit mehreren optischen Gliedern (1, 2, 3), wobei ein erstes optisches Glied (1) feststehend ist und diesem in Abbildungsrichtung ein zweites (2) und ein drittes (3) optisches Glied, jeweils zur Variation des Abbildungsmaßstabes längs der optischen Achse des Systems verschiebbar, nachgeordnet sind, *dadurch gekennzeichnet,* **daß** drei optische Glieder (1, 2, 3) mit positiver Brennweite vorgesehen sind, wobei das erste optische Glied (1) als Meniskus ausgebildet ist, vor dem vom Mikroskop erzeugten Bild (B) liegt, seine erste optische Fläche (F1) in konvexer Form in der Nähe einer Geräteanlagefläche (A) des Mikroskopes angeordnet und seine letzte optische Fläche (F3) konkav ausgebildet sowie nahe dem vom ersten optischen Glied (1) erzeugten Zwischenbild (ZB) angeordnet ist.

2. Optischen System nach Anspruch 1, **dadurch gekennzeichnet, daß** die optischen Glieder (1, 2, 3) zur achromatischen Korrektur Kittlinsen sind.

3. Optisches System nach Anspruch 1 oder 2, **dadurch gekennzeichnet, daß** das zweite (2) und das dritte (3) optische Glied in allen optischen Parametern identisch sind.

4. Optisches System nach Anspruch 3, **dadurch gekennzeichnet, daß** das zweite und das dritte optische Glied (2; 3) eine Brennweite von etwa 1/3 der Baulänge (BI), die dem Abstand des vom ersten optischen Glied (1) erzeugten Zwischenbild (ZB) von der Ebene der CCD-Matrix entspricht, aufweisen.

5. Optisches System nach Anspruch 3, **dadurch gekennzeichnet, daß** der Abstand zwischen dem zweiten (2) und dem dritten (3) optischen Glied etwas 1/3 der Baulänge (BI) bei mittlerer Zoomstellung entspricht.

6. Optisches System nach Anspruch 1 oder 2, **dadurch gekennzeichnet, daß** das zweite (2) und das dritte (3) optische Glied unterschiedliche Brennweiten (f2; f3) aufweisen, die sich aus folgender Beziehung zur Baulänge (BI) ergeben:

$$f2/BI = 0,4 \pm 0,1 \qquad bzw. \qquad f3/BI = 0,3 \pm 0,1.$$

7. Optisches System nach einem der Ansprüche 1 bis 6, **dadurch gekennzeichnet, daß** das zweite (2) und das dritte (3) optische Glied zur Änderung des Abbildungsmaßstabes gemeinsam um gleiche Strecken in gleicher Richtung längs der optischen Achse des Systems versschiebbar sind, und daß auch die CCT-Matrix zur Focussierung längs der optischen Achse verschiebbar angeordnet ist.

8. Optisches System nach einem der Ansprüche 4 bis 6, **dadurch gekennzeichnet, daß** zur Veränderung des Abbildungsmaßstabes bei konstanter Baulänge (BI) das zweite (2) und das dritte (3) optische Glied um verschiedene Strecken längs der optischen Achse verschoben werden.

9. Optisches System nach einem der Ansprüche 1 bis 8, **dadurch gekennzeichnet, daß** die Verschiebung des dritten Gliedes (3) längs der optischen Achse linear zur Bewegung eines Einstellelementes für die Variation des Abbildungsmaßstabes gekoppelt ist, während die Verschiebung des zweiten Gliedes (2) nicht linear zur Bewegung dieses Einstellelementes erfolgt.

10. Optisches System nach einem der Ansprüche 1 bis 9, **dadurch gekennzeichnet, daß** die optischen Parameter des zwelten (2) und dritten (3) optischen Gliedes folgende Werte aufweisen:

| Opt. Glied | Fläche F | Radius r | Dicke d | Brechzahl | Abbezahl |
|---|---|---|---|---|---|
| 2 | F4 | r4 = 207,09 | d4 = 5,10 | 1,60994 | 56,38 |
| | F5 | r5 =-16,555 | d5 = 2,90 | 1,67764 | 31,97 |
| | F6 | r6 =-41,726 | | | |
| 3 | F7 | r7 = 41,129 | d7 = 4,97 | 1,60994 | 56,38 |
| | F8 | r8 =-16,555 | d8 = 3,03 | 1,67764 | 31,97 |
| | F9 | r9 =- 53,884 | | | |

und folgende Bewegung zur Änderung des Zoomfaktors ausgeführt wird:

| Zoomfaktor | Abstand S (Zwischenbild bis F4) | Luftabstand d6 | Bildentfemung S' |
|---|---|---|---|
| 1 | 54,326 | 54,717 | 44,957 |

(fortgesetzt)

| Zoomfaktor | Abstand S (Zwischenbild bis F4) | Luftabstand d6 | Bildentfemung S' |
|---|---|---|---|
| 1,5 | 24,792 | 60,949 | 68,219 |
| 2 | 18,698 | 52,126 | 83,136 |
| 2.5 | 19,428 | 41,766 | 92,766 |
| 3 | 21,257 | 31,256 | 100,447 |
| 3,5 | 23,149 | 23,676 | 107,135 |
| 4 | 24,894 | 15,875 | 113,191 |
| 4.5 | 26,459 | 8,708 | 118,793 |
| 5 | 27,856 | 2,060 | 124,044 |

**11.** Optisches System nach einem der Ansprüche 1 bis 9, **dadurch gekennzeichnet, daß** das Verhältnis der Größe der Brennweite (f1) des ersten optischen Gliedes (1) zur Baulänge (BI) (1 ± 0,2): 1, der Abbildungsmaßstab 0,4 bis 2 und der Abstand (AB) der Geräteanlagefläche (A) des Mikroskopes zum vom Mikroskop erzeugten Bild (B) ≥ 60 mm beträgt.

**12.** Optisches System nach Anspruch 11, **dadurch gekennzeichnet, daß** bei einem Abstand (AB) der Geräteanlagefläche (A) des Mikroskopes zum vom Mikroskop erzeugten Bild (B) ≥ 60 mm und bei einer Entfernung (d3) des Zwischenbildes (ZB) von der letzten Fläche (F3) des ersten optischen Gliedes (1) von 12,54 mm dem optischen Parameter die ersten optischen Gliedes (1) folgende Werte aufweisen:

| Fläche F | Radius r | Dicke d | Brechzahl | Abbezahl |
|---|---|---|---|---|
| F1 | r1 = 22,786 | d1 = 13,04 | 1,61170 | 46,14 |
| F2 | r2 =-28,978 | d2 = 10,96 | 1,70445 | 29,84 |
| F3 | r3 = 24,412 | | | |

**13.** Optisches System nach Anspruch 11, **dadurch gekennzeichnet, daß** das Verhältnis der Größe der Brennweite (f1) zur Baulänge (BI) (0,68 ± 20 %): 1, der Abbildungsmaßstab 0,5 bis 2,5 und der Abstand (AB) der Geräteanlagefläche (A) des Mikroskops zum vom Mikroskop erzeugten Bild (B) ≥ 44 mm ist.

**14.** Optisches System nach Anspruch 13, **dadurch gekennzeichnet, daß** bei einer Entfernung (d3) des Zwischenbildes (ZB) von der letzten Fläche (F3) des ersten optischen Gliedes (1) von 11,54 mm die optischen Parameter des ersten optischen Gliedes (1) folgende Werte aufweisen:

| Fläche F | Radius r | Dicke d | Brechzahl | Abbezahl |
|---|---|---|---|---|
| F1 | r1 = 35,738 | d1 = 13,00 | 1,60994 | 56,38 |
| F2 | r2 =- 29,427 | d2 = 12,00 | 1,66885 | 35,56 |
| F3 | r3 = 74,989 | | | |

**15.** Optisches System nach einem der Ansprüche 1 bis 9, **dadurch gekennzeichnet, daß** das Verhältnis der Größe der Brennweite (f1) zur Baulänge (BI) (0,55 ± 20%): 1 bei einem Abbildungsmaßstab von 0,4 bis 2 und bei einem Abstand (AB) der Geräteanlagefläche (A) des Mikroskopes zum vom Mikroskop erzeugten Bild (B) ≥ 44 mm ist.

**16.** Optisches System nach Anspruch 15, **dadurch gekennzeichnet, daß** ein aus drei Linsen bestehendes erstes optisches Glied (1) mit einer ersten Fläche (F1) und einer letzten Fläche (F4') vorgesehen ist, das bei einem Abstand (AB) der Geräteanlagefläche (A) des Mikroskops zu dem vom Mikroskop erzeugten Bild (B) von 49 mm, einer Entfernung (d3) des Zwischenbildes (ZB) von der letzten Fläche (F4') des ersten optischen Gliedes (1) von 6 mm und der ersten Fläche (F1) des ersten optischen Gliedes (1) von der Geräteanlagefläche (A) des Mikroskops von 5 mm folgende optische Parameter aufweist:

| Fläche F | Radius r | Dicke d | Brechzahl | Abbezahl |
|---|---|---|---|---|
| F1 | 29,442 | 8,06 | 1,66742 | 39,81 |
| F2 | -20,901 | 21,45 | 1,85503 | 23,64 |

(fortgesetzt)

| Fläche F | Radius r | Dicke d | Brechzahl | Abbezahl |
|----------|----------|---------|-----------|----------|
| F3 | -17,853 | 5,99 | 1,58482 | 37,50 |
| F4' | 24,623 | | | |

**17.** Optisches System nach einem der Ansprüche 10 bis 16, **dadurch gekennzeichnet, daß** zwischen die Geräteanlagefläche (A) des Mikroskops und die erste Fläche (F1) des ersten optischen Gliedes (1) ein Zwischenring zwischengeschaltet ist.

**Claims**

**1.** An optical system with variable magnification to project an image generated by a microscope (B) into the plane of the CCD matrix of a video camera with several optical elements (1, 2, 3) with a first optical element (1) being fixed and a second (2) and a third (3) optical element, both of which may be moved along the system's optical axis to vary the magnification, being positioned downstream from this element *characterised in that* three optical elements (1, 2, 3) are provided with a positive focal length, with the first optical element (1) having the shape of a meniscus, lying in front of the image generated (B) by the microscope, with its first optical surface (F1) having a convex shape and being located in the vicinity of the microscope's contact surface (A) and its last optical surface (F3) having a concave shape and being positioned close to the intermediate image (ZB) generated by the first optical element (1).

**2.** An optical system as claimed in claim 1 **characterised in that** the optical elements (1, 2, 3) are cemented lenses for achromatic correction.

**3.** An optical system as claimed in claim 1 or 2 **characterised in that** the second (2) and third (3) optical elements are identical in all optical parameters.

**4.** An optical system as claimed in claim 3 **characterised in that** the second and third optical elements (2, 3) have a focal length of about 1/3 of the overall length (BI) corresponding to the distance between the intermediate image (ZB) generated by the first optical element (1) and the plane of the CCD matrix.

**5.** An optical system as claimed in claim 3 **characterised in that** the distance between the second (2) and third (3) optical elements is about 1/3 of the overall length (BI) with medium zoom setting.

**6.** An optical system as claimed in claim 1 or 2 **characterised in that** the second (2) and third (3) optical elements have different focal lengths (f2, f3) resulting from the following relationship to the overall length (BI):

$$f2/BI = 0.4 \pm 0.1 \qquad \text{and} \qquad f3/BI = 0.3 \pm 0.1.$$

**7.** An optical system as claimed in one of claims 1 to 6 **characterised in that** the second (2) and third (3) optical elements may be moved conjointly in the same direction along the system's optical axis to vary the magnification and the CCD matrix may also be moved along the optical axis for focussing.

**8.** An optical system as claimed in one of claims 4 to 6 **characterised in that** to vary the magnification with a constant overall length (BI), the second (2) and third (3) optical elements are moved different distances along the optical axis.

**9.** An optical system as claimed in one of claims 1 to 8 **characterised in that** the movement of the third element (3) along the optical axis is linear to the movement of an adjusting element for varying the magnification while the movement of the second element (2) is not linear to the movement of this adjusting element.

**10.** An optical system as claimed in one of claims 1 to 9 **characterised in that** the optical parameters of the second (2) and third (3) optical elements have the following values:

| Optical element | Surface F | Radius r | Thickness d | Refractive index | Abbe number |
|---|---|---|---|---|---|
| 2 | F4 | r4 = 207.09 | d4 = 5.10 | 1.60994 | 56.38 |
| | F5 | r5 = 16.555 | d5 = 2.90 | 1.67764 | 31.97 |
| | F6 | r6 = 41.726 | | | |
| 3 | F7 | r7 = 41.129 | d7 = 4.97 | 1.60994 | 56.38 |
| | F8 | r8 = 16.555 | d8 = 3.03 | 1.67764 | 31.97 |
| | F9 | r9 = 53.884 | | | |

and the following movement is performed to change the zoom factor:

| Zoom factor | Distance S (intermediate image to F4) | Air separation d6 | Image distance S' |
|---|---|---|---|
| 1 | 54.326 | 54.717 | 44.957 |
| 1.5 | 24.792 | 60.949 | 68.219 |
| 2 | 18.698 | 52.126 | 83.136 |
| 2.5 | 19.428 | 41.766 | 92.766 |
| 3 | 21.257 | 31.256 | 100.447 |
| 3.5 | 23.149 | 23.676 | 107.135 |
| 4 | 24.894 | 15.875 | 113.191 |
| 4.5 | 26.459 | 8.708 | 118.793 |
| 5 | 27.856 | 2.060 | 124.044 |

**11.** An optical system as claimed in one of claims 1 to 9 **characterised in that** the ratio between the value of the focal length (f1) of the first optical element (1) to the overall length (BI) is $(1 \pm 0.2):1$, the magnification is 0.4 to 2 and the distance (AB) between the microscope's contact surface (A) and the image (B) generated by the microscope is $\geq 60$ mm.

**12.** An optical system as claimed in claim 11 **characterised in that**, with a distance (AB) between the microscope's contact surface (A) and the image (B) generated by the microscope of $\geq 60$ mm and with a distance (d3) between the intermediate image (ZB) and the last surface of the first optical element (1) of 12.54, the optical parameters of the first optical element (1) have the following values:

| Surface F | Radius r | Thickness d | Refractive index | Abbe number |
|---|---|---|---|---|
| F1 | r1 = 22.786 | d1 = 13.04 | 1.61170 | 46.14 |
| F2 | r2 = 28.978 | d2 = 10.96 | 1.70445 | 29.84 |
| F3 | r3 = 24.412 | | | |

**13.** An optical system as claimed in claim 11 **characterised in that** the ratio between the value of the focal length (f1) to the overall length (BI) is $(0.68 \pm 20\,\%):1$, the magnification is 0.5 to 2.5 and the distance (AB) between the microscope's contact surface (A) and the image (B) generated by the microscope is $\geq 44$ mm.

**14.** An optical system as claimed in claim 13 **characterised in that**, with a distance (d3) between the intermediate image (ZB) and the last surface (F3) of the first optical element (1) of 11.54, the optical parameters of the first optical element (1) have the following values:

| Surface F | Radius r | Thickness d | Refractive index | Abbe number |
|---|---|---|---|---|
| F1 | r1 = 35.738 | d1 = 13.00 | 1.60994 | 56.38 |
| F2 | r2 = 29.427 | d2 = 12.00 | 1.66885 | 35.56 |
| F3 | r3 = 74.989 | | | |

**15.** An optical system as claimed in one of claims 1 to 9 **characterised in that** the ratio between the value of the focal length (f1) to the overall length (BI) is (0.55 ± 20 %):1, with a magnification of 0.4 to 2 and a distance (AB) between the microscope's contact surface (A) and the image (B) generated by the microscope of ≥ 44 mm.

**16.** An optical system as claimed in claim 15 **characterised in that** a first optical element (1) comprising three lenses is provided with a first surface (F1) and a last surface (F4'), which, with a distance (A) between the microscope and the image (B) generated by the microscope of 49 mm, a distance (d3) between the intermediate image (ZB) and the last surface of the optical element (F4') of the first optical element (1) of 6 mm and between the first surface (F1) of the first optical element (1) and the microscope's contact surface (A) of 5 mm, has the following optical parameters:

| Surface F | Radius r | Thickness d | Refractive index | Abbe number |
|-----------|----------|-------------|------------------|-------------|
| F1 | 29.442 | 8.06 | 1.66742 | 39.81 |
| F2 | -20.901 | 21.45 | 1.85503 | 23.64 |
| F3 | -17.853 | 5.99 | 1.58482 | 37.50 |
| F4' | 24.623 | | | |

**17.** Optical system as claimed in one of claims 10 to 16 **characterised in that** a spacer ring is interposed between the microscope's contact surface (A) and the first surface (F1) of the first optical element (1).

**Revendications**

**1.** Système optique à échelle de reproduction variable pour la reproduction d'une image (B), produite par un microscope, dans le plan de la matrice CCD d'une caméra vidéo, comportant plusieurs éléments optiques (1, 2, 3), dans lequel un premier élément optique (1) est fixe et derrière celui-ci sont disposés, dans le sens de reproduction, un deuxième élément optique (2) et un troisième élément optique (3), de manière que chacun puisse coulisser le long de l'axe optique du système pour faire varier l'échelle de reproduction, **caractérisé en ce que** sont prévus trois éléments optiques (1, 2, 3) à distance focale positive, le premier élément optique (1) étant conformé en ménisque devant lequel se situe l'image (B) produite par le microscope, sa première surface optique (F1) de forme convexe étant disposée à proximité d'une surface (A) du microscope pour l'application d'un appareil et sa dernière surface optique (F3) étant concave et disposée à proximité de l'image intermédiaire (ZB) produite par le premier élément optique (1).

**2.** Système optique selon la revendication 1, **caractérisé en ce que** les éléments optiques (1, 2, 3) sont des lentilles accolées pour la correction achromatique.

**3.** Système optique selon la revendication 1 ou 2, **caractérisé en ce que** tous les paramètres optiques du deuxième élément optique (2) et du troisième élément optique (3) sont identiques.

**4.** Système optique selon la revendication 3, **caractérisé en ce que** le deuxième et le troisième élément optique (2 ; 3) présentent une distance focale d'environ 1/3 de la longueur de construction (B1) qui correspond à la distance entre l'image intermédiaire (ZB) produite par le premier élément optique (1) et le plan de la matrice CCD.

**5.** Système optique selon la revendication 3, **caractérisé en ce que** la distance entre le deuxième élément optique (2) et le troisième élément optique (3) correspond à environ 1/3 de la longueur de construction (B1) pour une position centrale du zoom.

**6.** Système optique selon la revendication 1 ou 2, **caractérisé en ce que** le deuxième élément optique (2) et le troisième élément optique (3) présentent des distances focales (f2 ; f3) différentes qui résultent de la relation suivante par rapport à la longueur de construction (B1) :

$$f2/B1 = 0,4 \pm 0,1 \qquad \text{ou} \qquad f3/B1 = 0,3 \pm 0,1$$

**7.** Système optique selon l'une des revendications 1 à 6, **caractérisé en ce que** le deuxième élément optique (2) et le troisième élément optique (3) peuvent coulisser ensemble sur de mêmes distances dans le même sens le long de l'axe optique du système, pour faire varier l'échelle de reproduction, et **en ce que** la matrice CCT est disposée aussi de manière à pouvoir coulisser le long de l'axe optique pour la mise au point.

**8.** Système optique selon l'une des revendications 4 à 6, **caractérisé en ce que** pour faire varier l'échelle de reproduction avec une longueur de construction B1 constante, on fait coulisser le deuxième élément optique (2) et le troisième élément optique (3) de distances différentes le long de l'axe optique.

**9.** Système optique selon l'une des revendications 1 à 8, **caractérisé en ce que** le coulissement du troisième élément (3) le long de l'axe optique est accouplé linéairement au déplacement d'un élément de réglage pour la variation de l'échelle de reproduction, tandis que le coulissement du deuxième élément (2) ne s'effectue pas linéairement par rapport au déplacement de cet élément de réglage.

**10.** Système optique selon l'une des revendications 1 à 9, **caractérisé en ce que** les paramètres optiques du deuxième élément optique (2) et du troisième élément optique (3) présentent les valeurs suivantes :

| Elément optique | Surface F | Rayon r | Epaisseur d | Indice de réfraction | Coefficient d'Abbe |
|---|---|---|---|---|---|
| 2 | F4 | r4 = 207,09 | d4 = 5,10 | 1,60994 | 56,38 |
|  | F5 | r5 = 16,555 | d5 = 2,90 | 1,67764 | 31,97 |
|  | F6 | r6 = 41,726 |  |  |  |
| 3 | F7 | r7 = 41,129 | d7 = 4,97 | 1,60994 | 56,38 |
|  | F8 | r8 = 16,555 | d8 = 3,03 | 1,67764 | 31,97 |
|  | F9 | r9 = 53,884 |  |  |  |

et le déplacement suivant est effectué pour faire varier le facteur de zoom :

| Facteur de zoom | Distance (image intermédiaire jusqu'à F4) | S Distance l'air d6 | dans Distance de l'image S' |
|---|---|---|---|
| 1 | 54,326 | 54,717 | 44,957 |
| 1,5 | 24,792 | 60,949 | 68,219 |
| 2 | 18,698 | 52,126 | 83,136 |
| 2,5 | 19,428 | 41,766 | 92,766 |
| 3 | 21,257 | 31,256 | 100,447 |
| 3,5 | 23,149 | 23,676 | 107,135 |
| 4 | 24,894 | 15,875 | 113,191 |
| 4,5 | 26,459 | 8,708 | 118,793 |
| 5 | 27,856 | 2,060 | 124,044 |

**11.** Système optique selon les revendications 1 à 9, **caractérisé en ce que** le rapport de la valeur de la distance focale (f1) du premier élément optique (1) à la longueur de construction (B1) est de $(1 \pm 0,2):1$, l'échelle de reproduction va de 0,4 à 2 et la distance (AB) de la surface (A) du microscope pour l'application d'un appareil par rapport à l'image (B) produite par le microscope est $\geq 60$ mm.

**12.** Système optique selon la revendication 11, **caractérisé en ce que** pour une distance (AB) de la surface (A) du microscope pour l'application d'un appareil par rapport à l'image (B) produite par le microscope $\geq 60$ mm, et pour une distance d3 de l'image intermédiaire (ZB) par rapport à la dernière surface (F3) du premier élément optique (1) de 12,54 mm, les paramètres optiques du premier élément optique (1) présentent les valeurs suivantes :

| Surface F | Rayon r | Epaisseur d | Indice réfraction | de Coefficient d'Abbe |
|---|---|---|---|---|
| F1 | r1 = 22,786 | d1 = 13,04 | 1,61170 | 46,14 |
| F2 | r2 = 28,978 | d2 = 10,96 | 1,70445 | 29,84 |
| F3 | r3 = 24,412 |  |  |  |

**13.** Système optique selon la revendication 11, **caractérisé en ce que** le rapport de la valeur de la distance focale (f1) à la longueur de construction (B1) est de (0,68 ± 20 %):1, l'échelle de reproduction étant de 0,5 à 2,5 et la distance (AB) de la surface (A) du microscope pour l'application d'un appareil par rapport à l'image (B) produite par le microscope est ≥ 44 mm.

**14.** Système optique selon la revendication 13, **caractérisé en ce que** pour une distance d3 de l'image intermédiaire (ZB) par rapport à la dernière surface (F3) du premier élément optique (1) de 11,54 mm, les paramètres optiques du premier élément optique (1) présentent les valeurs suivantes :

| Surface F | Rayon r | Epaisseur d | Indice réfraction | de Coefficient d'Abbe |
|---|---|---|---|---|
| F1 | r1 = 35,738 | d1 = 13,00 | 1,60994 | 56,38 |
| F2 | r2 = 28,427 | d2 = 12,00 | 1,66885 | 35,56 |
| F3 | r3 = 74,989 | | | |

**15.** Système optique selon l'une des revendications 1 à 9, **caractérisé en ce que** le rapport de la valeur de la distance focale (f1) à la longueur de construction (B1) est de (0,55 ± 20 %):1 pour une échelle de reproduction de 0,4 à 2 et pour une distance (AB) de la surface (A) du microscope d'application d'un appareil par rapport à l'image (B) produite par le microscope qui est ≥ 44 mm.

**16.** Système optique selon la revendication 15, **caractérisé en ce qu'**il est prévu un premier élément optique (1) constitué de trois lentilles avec une première surface (F1) et une dernière surface (F4'), qui présentent les paramètres optiques suivants pour une distance (AB) de la surface (A) de microscope pour l'application d'un appareil par rapport à l'image (B) produite par le microscope de 49 mm, une distance (d3) de l'image intermédiaire (ZB) par rapport à la dernière surface (F4') du premier élément optique (1) de 6 mm et une distance de 5 mm de la première surface (F1) du premier élément optique (1) par rapport à la surface (A) du microscope pour l'application d'un appareil :

| Surface F | Rayon r | Epaisseur d | Indice réfraction | de Coefficient d'Abbe |
|---|---|---|---|---|
| F1 | 29,442 | 8,06 | 1,66742 | 39,81 |
| F2 | -20,901 | 21,45 | 1,85503 | 23,64 |
| F3 | -17,853 | 5,99 | 1,58482 | 37,50 |
| F4' | 24,623 | | | |

**17.** Système optique selon l'une des revendications 10 à 16, **caractérisé en ce qu'**une bague intermédiaire est montée entre la surface (A) du microscope pour l'application d'un appareil et la première surface (F1) du premier élément optique (1).

FIG. 1A

MIKROSCOPE

EP 0 688 440 B1

## FIG.1B

ZOOM 3

## FIG.1C

ZOOM 5

CCD-MATRIX

EP 0 688 440 B1